# EUROPEAN PATENT APPLICATION

(11) **EP 4 166 780 A1**
(43) Date of publication of application: **19.04.2023**
(21) Application number: 21202410.3
(22) Date of filing: 13.10.2021
(51) Int. Cl.: F03D 1/06, F03D 80/30

(54) **A ROTOR BLADE LIGHTNING PROTECTION SYSTEM WITH SPARK-GAPS FOR EQUIPOTENTIAL BONDS**

(71) Applicant: Siemens Gamesa Renewable Energy A/S, 7330 Brande (DK)
(72) Inventor: Ponnada, Sri Markandeya Rajesh, 9000 Aalborg (DK)
(74) Representative: SGRE-Association

(57) **Abstract**

A rotor blade lightning protection system with spark-gaps for equipotential bonds is provided. The lightning protection system comprises structural element and a down-conductor in parallel. The down-conductor is arranged from the root towards the tip of the blade, divided in branches connected to air-termination units placed in the surface of the rotor blade. The equipotential bonds may be divided in two halves. The first half equipotential bonds arranged along the structural element and the second half equipotential bonds are arranged along the down-conductor. Spark-gaps are arranged between the first and second half equipotential bonds, acting as a high-voltage switch between the structural element and the down-conductor. The spark-gaps are designed for severe lightning strikes, being triggered when the break-down voltage is achieved, thus minimizing the use of equipotential bonds only to lightning events severe enough to cause a flash-over.

## Description

### FIELD OF THE INVENTION

The present invention relates to a lightning protection system provided with a structural element and equipotential bonds arranged along the structural element and the down-conductor. Spark-gaps are placed in the equipotential bonds, between the conducting components and the down-conductor. The spark-gaps act as a high-voltage switches that are triggered when the break-down voltage is achieved. The break-down voltage of the spark-gaps is designed for severe lightning strikes, thus minimizing the use of equipotential bonds only to lightning events that are severe enough to cause a flashover. Otherwise, for minor lightning strikes the spark-gaps may not be triggered, leading the current of the lightning strike from the air-termination units arranged in the tip of the rotor blade into the tower and subsequently to the earth via the down-conductor.

### BACKGROUND OF THE INVENTION

The evolution of wind turbines, both in terms of size and the power produced by them is leading to new generations of wind turbines having ever-increasing dimensions insofar as tower height and rotor diameter. The use of longer wind turbines and larger rotor blades results in the need to optimize blade design by using stiffer and lighter materials. Therefore, the materials are generally selected based on their stiffness-toweight ratio or specific modulus and on the element being designed. Since the structural element is a critical load-carry element, the use of carbon fiber reinforced polymer (CFRP) for this element may be preferred over glass fiber reinforced polymer (GFRP), due to CFRP has a very favorable stiffnessto-weight ratio.

Rotor blades are the most exposed part of the wind turbine with respect to lightning strikes and the inclusion of a lightning protection system (LPS) is needed to prevent serious damage on the rotor blades. The CFRP is electrically conductive and when it is employed in structural components of blades, such a spar cap, demands to be provided with equipotential bonds along the length of the CFRP components and the down-conductor at regular intervals. The equipotential bonds ensure that the voltage difference between the structural components and the down-conductor is under the threshold, otherwise it may lead to a flashover during a lightning event causing uncontrolled structural damage.

Additionally, when the conducting carbon elements are close to the blade exterior can be subject to lightning attachment, which can cause damage to the structure of the blade and turbine failure without warnings. Therefore, the use of carbon elements is restricted in the outermost parts of the blade, particularly the tip region. Additionally, for same reasons is a risk to have air-terminations adjacent to the carbon elements.

Furthermore, there is a high risk of hot-spots and burns under high-current conditions due to the impedance differences between carbon fiber and metals that may lead to delamination and other structural defects. A frequent flow of lightning currents through the equipotential bonds could degrade them leading to loss in performance over the blade lifetime leading to potential failure, being unavailable when really required by a severe lightning event. Any problem caused by system degradation or malfunction of the same is difficult to detect and extremely complex to access and repair it. Hence, it is important that impedance differences in equipotential bonds are minimized and that they are utilized sparingly and only when necessary.

However, CFRP has great advantage as it offsets the weight and offers design flexibility, characteristics difficult to find together in another material. Nevertheless, the lightning protection system must be available in case of a severe lightning event. Therefore, it is critical to have a lightning protection system that only utilizes equipotential bonds when required. In order to not degrade the equipotential bonds with the minor lightning strikes, the invention arranges spark-gaps between the equipotential bonds. The spark-gap acts as a switch that triggers when overcomes the break-down voltage. The break-down voltage is determined based on the distance between the carbon structural element and the down-conductor. Once the threshold is achieved, the current goes by the spark-gap. Thus, avoiding catastrophic and expensive repairs due to damage in the rotor blades.

In order to avoid high-voltage flashover, lightning protection systems typically comprise equipotential bonds placed between conducting elements via multiple electrical connections at regular intervals as described for example in US2007074892A1, US2008073098A1, US2012134826A1, US2015292479A1, EP2930355A1, and US2016327028A1.

US2007074892A1 discloses a member for potential equalizing between two conductive members of the wind turbine blade, said member has an improved electrical contact and is shaped as a ribbon, the potential equalizing member is placed between the two conductive members, which one of the conductive members comprises carbon fibers.

US2008073098A1 and US2012134826A1 disclose wind turbine blades formed by various connections of carbon fiber laminates in the blade. The LPS is based on a main cable that is equipotentialized with the carbon fiber laminates. The main cable has derivations via auxiliary cables connected directly to the carbon fiber laminations. The auxiliary cables are connected to a metal plate that is positioned during the blade lamination and curing process, being mechanically robust and electrically well connected to the carbon fiber laminates, thus capable of reducing the passage of current across the carbon laminate and favoring the conduction across the main cable.

US2015292479A1 discloses a wind turbine blade with a spar cap assembly, a lightning conductor and a potential equalizing element embedded in a common polymer matrix, designed as a prefabricated assembly for its integration into the rotor blade to connect electrically the spar cap and the lightning conductor.

EP3569394A1 describes a method for manufacturing a spar cap, arranging carbon stacks side by side and bonded between each other. This method also comprises the steps of connecting a number of conductive strips to the spar cap and the one free end of the conductive strip is connected to the LPS down-conductor, to avoid any flash-over to the carbon spar cap.

EP2930355A1 describes a lightning protection system comprising a carbon fiber containing support structure component in the rotor blade and a flat potential equalization element that electrically connects the lightning conductor to other conductive elements within the blade.

US2016327028A1 describes a wind turbine blade with a lightning protection system with conducting structural components, such as structural shells with caps formed by carbon fiber laminates. Further, it comprises lightning receptors connected to the conductor cables of the lightning protection system, as well as lateral lightning receptors arranged in the leading and trailing edge in the cross sections. It comprises connecting means between both receptors for equipotentializing the lightning protection system.

A typical disadvantage of such known is that none of this solutions differentiates between a minor lightning strike or a severe lightning strike and neither consider the degradation of the carbon elements within the LPS or delamination and/or burns, and the possibility that the LPS may be unavailable in the moment of a severe lightning event, i.e., the functionality of the LPS has deteriorated for protection against a severe lightning strike. Thus, there exists an urgent need to provide a lightning protection system able to differ the type of lightning strike being received and control the current path leading it to the corresponding part of the lightning protection system.

It is therefore a goal of the present invention to provide an improved lightning protection system that minimizes the use of the equipotential bonds and using them only when required. In particular, shall be provided a lightning protection system with structural element and equipotential bonds arranged between the structural element and the down-conductor. Spark-gaps may be arranged in the equipotential bonds, so when are triggered it may connect the structural element with the down-conductor through the equipotential bonds. The spark-gap acts as a high-voltage switch that is triggered when the break-down voltage is achieved. Hence, as the spark-gaps are arranged between the equipotential bonds, these may only be utilized in high-voltage and low break-down scenarios. Spark-gaps may minimize the use of equipotential bonds only to lightning events that are severe enough to cause a flashover, thereby increasing the lifetime of the lightning protection system. For minor lightning strikes, the lightning current may be led via the down-conductor from the air-termination units to the earth.

### SUMMARY OF THE INVENTION

The object of the invention is achieved by the independent claims. The dependent claims describe advantageous developments and modifications of the invention.

In accordance with the invention there is provided a rotor blade with a lightning protection system that minimizes the use of the equipotential bonds, which is achieved by arranging spark-gaps in the equipotential connections between the structural elements and the down-conductor in the rotor blade. The spar caps are going to be referred as structural elements. The rotor blade is provided with at least one structural element and a down-conductor, where the down-conductor may be placed in parallel to the structural element. The structural element may comprise carbon, metal or any other conducting material. The equipotential bond can be assumed to be consist of two halves. At least one first half equipotential bond may be arranged along the structural element and at least one second half equipotential bond may be arranged along the down-conductor, aligned with the first half equipotential bond. To each first half equipotential bond corresponds a second half equipotential bond, placed in front of each other. A spark-gap is arranged between each equipotential bond, connecting the two halves. The spark-gap is conformed by a set of at least two electrodes, one first electrode and one second electrode per spark-gap. One first electrode is arranged at the end of each first half equipotential bond and one second electrode is arranged at the end of each second half equipotential bond, therefore conforming a spark-gap.

A spark-gap consists of an arrangement of at least two conducting electrodes separated by a gap usually filled by air or another gas. It allows an electric spark to pass between the electrodes. When the potential difference between the electrodes is enough to break-down the gap, a spark is formed, ionizing the gas and drastically reducing its electrical resistance and thereby electrically closing the gap and "triggering" the spark-gap. The spark-gap can be visualized as a high-voltage switch, whose trigger may be controlled based on the voltage between the electrodes, known as the break-down voltage, the distance between them and the properties of the gas such as pressure, ionization potential, etc. Therefore, the spark-gap may provide the control over the equipotential bond, once the spark-gap is triggered the current may pass through the equipotential bond. The spark-gap may act as a switch that may connect the equipotential bond with the structural element and the down-conductor. When the lightning strike is high enough to achieve the break-down voltage and trigger the spark-gap, the gap may be electrically closed and thereby may let the current pass through it.

The rotor blade may be provided with a plurality of air-termination units that may be connected to the down-conductor. The air-termination units may be located on the surface of the rotor blade near the tip. The down-conductor may be placed in parallel to the structural element, leaving a short distance between them. The down-conductor may be made of solid or stranded cable and may go from the root of the rotor blade towards to the tip, where near the tip may be divided in branches that may be connected to the air-termination units. Additional air-termination units may be placed along the length of the structural element towards the inboard regions of the rotor blade and may be connected via metal-metal spark-gaps, this increases the interception efficiency of the blade.

When lightning is intercepted by an air-termination unit and transferred via the down-conductor, a mutual induction sets up current in the elements that may be in parallel to the down-conductor. As the carbon structural elements may be in parallel with the down-conductor, the current may be induced in them. The material of the down-conductor in combination with waveform parameters of the lightning currents may cause a potential drop along the down-conductor. The voltage difference between the carbon structural elements and the down-conductor may force flash-over between them, causing severe damage to the structure and to the rotor blade. This risk may be avoided by providing equipotential bonds at regular intervals along the length of the carbon structural elements. However, the anisotropy of CFRP and the differences in properties with respect to the down-conductor, hinders to transfer current between them, leading to sparking and hot-spots. Additionally, high currents also arise the challenge of Joule heating that may cause thermal damage leading to delamination and burns, severely degrading the performance of the structural element.

With a lightning protection system that is less prone to damage and the risk of lightning attachment may be reduced in the exterior of the rotor blade, carbon elements may be placed further towards the tip, making the rotor blade lighter and allowing to tailor better the shape of the tip, which improves the AEP (Annual Energy Production) of the rotor blade. Thus, first half and second half of equipotential bonds may be made of carbon and may be placed further towards the tip. Additionally, a more reliable LPS aims to reduce the outboard inspections of the rotor blades, which is an EHS concern both on ground and specially when the blade is mounted due to space constraints, which limits how far out serviceable technology may be placed in blades. With this improved lightning protection system, the inspections of the rotor blade may be reduced as the lifetime of the equipotential bonds may be increased, as they may be used only when required.

Carbon fiber is a conductor material and transmits current, however, the electrical conductivity of the carbon fiber depends strongly on the orientation of carbon fibers, the longitudinal conductivity that is parallel to the fiber direction is the highest, whilst the transverse conductivity goes in the perpendicular direction to the fibers. To further reduce the impedance difference at the interfaces between the equipotential bonds and the electrodes of the spark-gap, the direction of the pultrusion, extrusion, machining, or forming as applicable to carbon and metals may be aligned appropriately to achieve the least impedance difference. For example, this may be achieved by avoiding perpendicular connections between the equipotential bonds and the electrodes in some cases. The first electrode and the second electrode of the spark-gap may comprise carbon, metal or other conducting material. The first electrode may be made of the same material as the second electrode. In the same way, first electrode may be made of different material as the second electrode, having spark-gap of hybrid arrangement. Different combinations of materials for hybrid spark-gaps may comprise carbon, metal or other conducting materials. Hence, a carbon-metal spark-gap may be particularly realized, thus the carbon first electrode may be connected to the first half equipotential bond and the metal second electrode may be connected to the second half equipotential bond or to the down-conductor, reducing the impedance differences arising from otherwise different base material. The combination of materials of the spark-gap arrangement conformed by the first electrode and the second electrode may be any of metal-metal, carbon-carbon, or metal-carbon.

In addition to equipotential bonds made of carbon between carbon structural elements and down-conductor, due to the advantages of using carbon as a conductive material, its use in other conducting elements may be extended. Therefore, spark-gaps may be made of carbon as well. Additionally, in order to further reduce the impedance difference at the interfaces, the number of components in the lightning protection system may be reduced, by producing a unified component that serves as both part of the first half equipotential bond and the first electrode of the spark-gap. This may be achieved by casting the carbon fibers of one of the ends of the first half equipotential bond and molding it into a rod that may serve as the first electrode of the spark-gap.

With the down-conductor, having a unified component may be possible by utilizing a share of the cable strands to form the second electrode of the spark-gap, which may further be fused by melting and subsequent solidification into required shape of the second electrode. The strands of the cable may be crimped, soldered or welded to turn into the second electrode of the spark-gap. The shape of the first electrode and the second electrode may be a sphere, rod, blunt or bundled mesh. In both cases, a spherical or hemi-spherical cap may serve as the end of the first and second electrodes. The second electrode also be made of metal, carbon or any other conducting material.

Forming the equipotential bonds of carbon fabrics, carbon fibers, metal cables or metal strands into the electrodes of spark-gaps minimizes the number of interfaces that lead to differences in impedances. This reduces drastically the risk of delamination and burns and mitigate the structural risks to the rotor blade. Furthermore, galvanic corrosion may be avoided by using carbon-carbon or metal-metal spark-gaps and further minimizing the number of different materials and components in the equipotential bonds. Overall cost of the rotor blade and cost per unit energy is reduced owing to a faster and more effective production as fewer components needed to be manufactured. Additionally, service and maintenance requirement and related down-time may be reduced, as well as an increased AEP due to lighter and longer blades.

In rare events, lightning may also attach to the blade at site other than the air-terminations units such as a carbon structural element. A metallic cage may allow the transfer of lightning current while shielding the carbon elements from damage. A metallic cage may be achieved by covering the carbon elements with a high conductivity metallic sheath. In a second embodiment, the structural element may be protected either locally or in entirety with a metallic sheath. The material of the metallic sheath may be metals and alloys such as any of copper, bronze or aluminum. Materials such as aluminum may be used with protection enabled against galvanic corrosion.

When carbon elements such as structural elements are protected with metallic sheaths, it may protect them from damage arising from direct lightning attachment. Particularly, the combination of metallic sheaths for carbon elements and metal-metal spark-gaps, has an important advantage as additional receptors may be placed along the length of the structural element towards the inboard regions of the blade and connected via metal-metal spark-gaps. This increases the interception efficiency of the rotor blade. Furthermore, with the metallic sheath protecting the structural element from exterior lightning attachment and simplicity of the equipotential bond connection inside the blade, repairs related with structural and lightning are decoupled making such repairs fast and effective.

In order to strengthen the LPS by extending further protection to the structural element as well as to the inside of the rotor blade from lightning strikes, part of the metallic sheath that covers the structural elements may be turn into spark-gaps, having the same benefits described above. For this, part of the metal sheath that covers the structural elements may be turn into the first electrode of the spark-gap by fusing, melting, crimping, soldering, welding or any other suitable methods. A consequent solidification into a required shape of the electrode may be done. The shape of the first electrode and the second electrode is any of sphere, rod, blunt or bundled mesh. Subsequently, a spherical or hemi-spherical cap may be attached to serve as the end of the electrode. The metallic sheath may be any of mesh, net, foil, cables or bundles. The metallic sheath protecting the structural elements from lightning attachment, simplify the connection of the equipotential bonds inside the rotor blade, thus making the lightning associated repairs faster and effective.

In general, the shell and the web may be filled with a core layer, e.g. balsa wood. The first half equipotential bond and the second half equipotential bond may be arranged between the structural element and the spark-gap, and may pass over, through or across the shell and the web of the rotor blade. A part of the core layer may be removed to place the spark-gap in that area within the blade, so the spark-gap position could be chosen flexibly to accommodate according to the design and manufacture process constrains.

Many wind turbines located in cold climate regions incorporate conducting non-structural elements such as de-icing and anti-icing systems, with resistive heating elements attached at the surface of the rotor blade, such as carbon heating mats. In a third embodiment of the invention, a second equipotential bond and a third equipotential bond may be connected between the conducting non-structural element and the structural element and/or the down-conductor. Additionally, a second spark-gap may be arranged within the second equipotential bond and a third spark-gap may be arranged within the third equipotential bond. The second and third spark-gap may be carbon-carbon spark-gap. In case that the second and third equipotential bonds may be connected between the conducting non-structural element and the down-conductor, the second and third spark-gap may be metal-carbon spark-gap, thus increasing the lightning protection of these components. The second and third spark-gaps may be placed on the outer surface of the rotor blade, within the shell or on the inner surface of the rotor blade. In case that the second and third spark-gaps may be placed within the inner shell, a part of the core layer may be removed to place the spark-gaps in that area, allowing the position of the spark-gap to be flexible.

In a fourth embodiment, a cable may also be incorporated in parallel to the structural element and the down-conductor. The cable is not connected to the structural element nor the down-conductor. The structural element may or may not be covered with the metallic sheath. The cable may be connected near the root towards near the tip, where it may be connected to an electrical device that may be placed in the interior, the shell, or on the surface of the rotor blade. The electrical device may be any of sensor, actuator, inductive heating element or any device with conducting components. In another embodiment, the cable may be connected to the structural element through the first half equipotential bond, connecting all the first half equipotential bonds along the structural element. Or alternatively, the cable may be connected to the down-conductor through the second half equipotential bond, connecting all the second half equipotential bonds along the down-conductor. The spark-gap may be arranged between the first half equipotential bond and the second half equipotential bond and may be a metal-metal spark-gap. In a further embodiment, the cable may be connected to the down-conductor through a fourth equipotential bond. A fourth spark-gap may be arranged between the fourth equipotential bond.

In a fifth embodiment of the invention, the structural element may not be present. The cable may be placed in parallel to the down-conductor and may be connected from the root towards the tip of the blade. The first half equipotential bond may be connected to the cable and the second half equipotential bond may be connected to the down-conductor. The spark-gap may be arranged between the first half equipotential bond and the second half equipotential bond. The cable may be connected to an electrical device that may be located in the interior, the shell, or on the surface of the rotor blade. The electrical device may be any of any of sensor, actuator, inductive heating element or any device with conducting components.

In a sixth embodiment of the invention, the structural element may not be present as well and a conducting non-structural element may be attached at the surface of the rotor blade, as the one mentioned in the third embodiment for de-icing and anti-icing systems. The conducting non-structural element may be connected to the down-conductor through a fifth equipotential bond with a fifth spark-gap arranged between it. The cable may be present in this embodiment as well, it might be placed in parallel to the down-conductor and may be connected to the down-conductor through the fourth equipotential bond. The fourth spark-gap may be arranged between the fourth equipotential bond. The cable may be connected from the root towards near the tip and may be connected to an electrical device that may be located in the interior, the shell, or on the surface of the rotor blade. The electrical device may be any of sensor, actuator, inductive heating element or any device with conducting components.

### BRIEF DESCRIPTION OF THE DRAWINGS

Embodiments of the invention are now described, by way of example only, with reference to the accompanying drawings, of which:
Fig. 1 shows a cross-section of a typical rotor blade with structural elements and a metal down-conductor.
Fig. 2 shows a schematic top view of a rotor blade with the structural elements and the down-conductor in parallel along the longitudinal direction and the respective connection of the equipotential bonds between them.
Fig. 3 shows a plain view of the equipotential bonds between the structural element and the down-conductor.
Fig. 4 shows a plain view of a preferred second embodiment, the first half equipotential bond is fused to form the first electrode, and strands of the down-conductor are fused into the second electrode.
Fig. 5 and 6 shows plan view of a preferred embodiment of a carbon-metal spark-gap, with a sphere and blunt shapes.
Fig. 7 shows a schematic top view of a preferred second embodiment of a rotor blade with the structural element covered by a metallic sheath.
Fig. 8 shows a schematic view of a preferred second embodiment, the metallic sheath covers the structural element and is extended to the electrodes.
Fig. 9 shows a cross-section of a rotor blade of a preferred third embodiment, with a conducting non-structural element connected to the structural element through spark-gaps.
Fig. 10 shows a plain view of a fourth embodiment, with a cable in parallel to the structural element and the down-conductor.
Fig. 11 shows a cross section of a fourth embodiment, with a cable connected to the down-conductor via a spark-gap.
Fig. 12 shows a plain view of a fifth embodiment, with a cable in parallel to the down-conductor.
Fig. 13 shows a cross section of a sixth embodiment, with a conducting non-structural element and a cable connected to the down-conductor via spark-gap.

The illustration in the drawings is in schematic form. It is noted that in different figures, similar or identical elements may be provided with the same reference signs.

### DESCRIPTION OF THE DRAWINGS

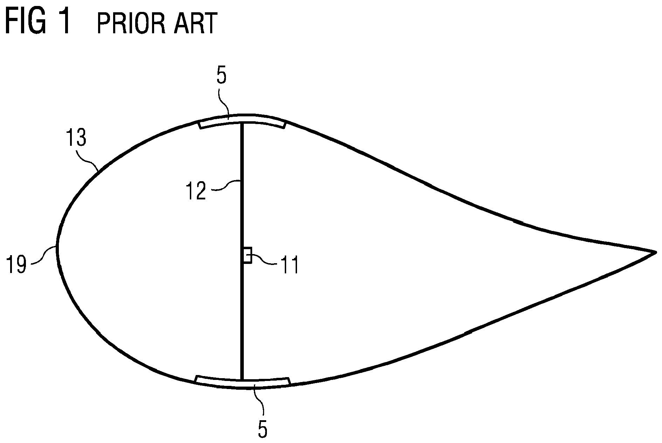

Fig. 1 shows a cross-section of a typical rotor blade with a structural element (5) within the rotor blade (1). The structural element (5) runs parallel to the longitudinal direction of the rotor blade (1) and are supported by the web (12). The down-conductor (11) runs along the longitudinal direction parallel to the structural element (5).

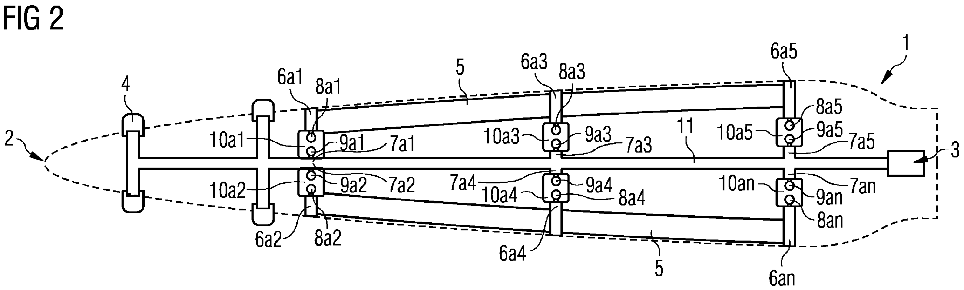

Fig. 2 shows a schematic top view of a rotor blade (1) with the disposition of the elements of the inventive lightning protection system. The structural element (5) runs parallel to the longitudinal direction of the rotor blade (1) and the down-conductor (11) goes from the root (3) towards to the tip (2) and near the tip (2) may be divided in branches connected to the air-termination units (4). A plurality of air-termination units (4) are located near the tip (2) and arranged at the surface of the rotor blade (1), each one connected to the down-conductor (11). At least one first half equipotential bond (6a₁, 6a₂...6aₙ) is arranged along the length of the structural element (5) and one first electrode (8a₁, 8a₂... 8aₙ) is arranged at the end of each first half equipotential bond (6a₁, 6a₂...6aₙ) . At least one second half equipotential bond (7a₁, 7a₂... 7aₙ) is arranged along the down-conductor (11) and one second electrode (9a₁, 9a₂... 9aₙ) is arranged at the end of each second half equipotential bond (7a₁, 7a₂...7aₙ) . The first half equipotential bond (6a₁, 6a₂...6aₙ) and second half equipotential bond (7a₁, 7a₂... 7aₙ) are aligned facing to each other, thus the first electrode (8a₁, 8a₂... 8aₙ) and the second electrode (9a₁, 9a₂... 9aₙ) are aligned and each pair conforms a spark-gap (10a₁, 10a₂... 10aₙ) .

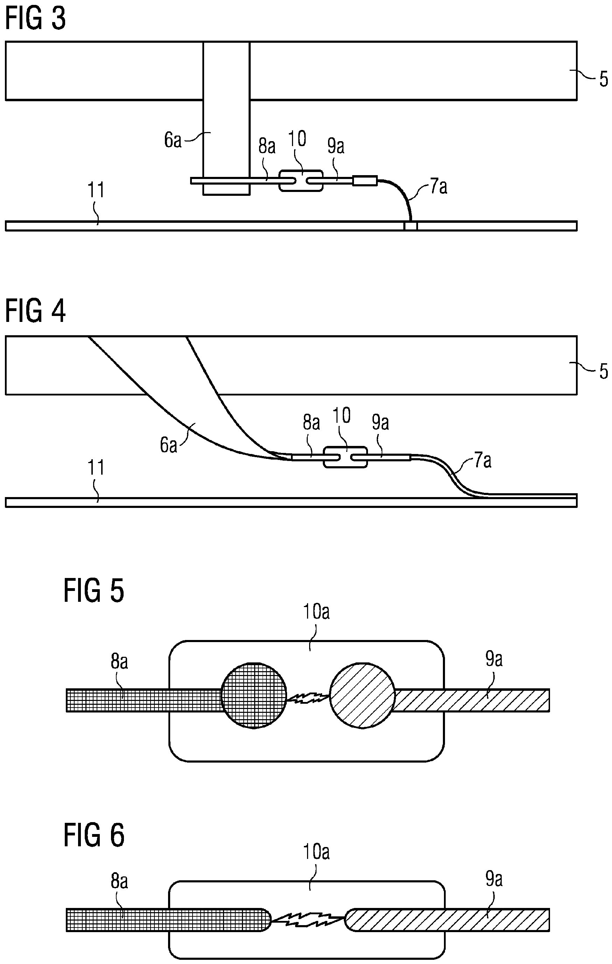

Fig. 3 shows a plain view of a first half equipotential bond (6a) connected to the structural element (5) and at its other end is arranged a first electrode (8a). A second half equipotential bond (7a) is connected to the down-conductor (11) and at its other end is arranged a second electrode (9a). The first electrode (8a) and the second electrode (9a) conforms a spark-gap (10a).

Fig. 4 shows a plain view of a first half equipotential bond (6a) connected to a structural element (5) and at its other end is casted, molded or melted to form the first electrode (8a). Part of the down-conductor is melted to form the second electrode (9a).

Fig. 5 and 6 shows plain view of a preferred embodiment of a first electrode (8a) of carbon and a second electrode (9a) made of metal, conforming a carbon-metal spark-gap (10a). The shape of the first electrode (8a) and second electrode (9a) in Fig. 5 a show a spark-gap (10a) with sphere electrodes (8a, 9a) and in the Fig. 6 show a spark-gap (10a) with blunt end electrodes (8a, 9a). The shape of the electrodes (8a, 9a) is any of sphere, rod, blunt or bundled mesh.

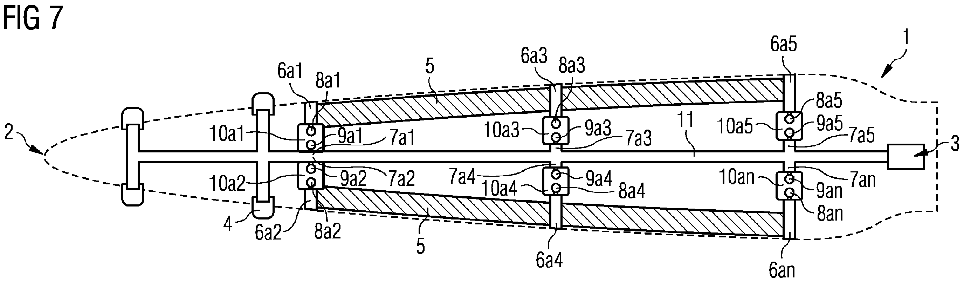

Fig. 7 shows a schematic top view of a preferred second embodiment. The disposition of the elements is the same as described in Fig. 2. The structural element (5) is covered with a metallic sheath.

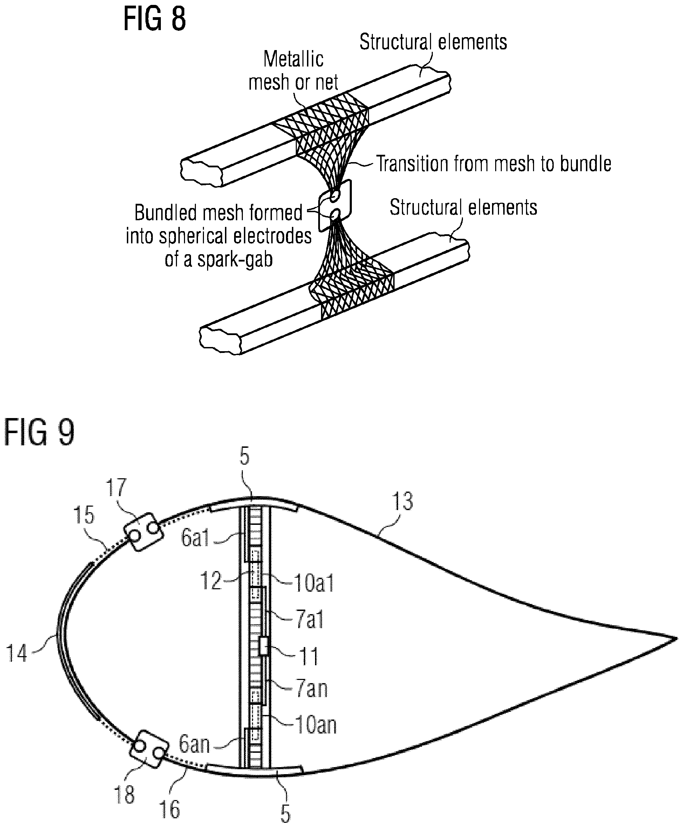

Fig. 8 shows a schematic view of a preferred second embodiment. The metallic sheath covers the structural element (5) and is extended to the electrodes (8a, 9a) of the spark-gap (10a) .

Fig. 9 shows a cross-section of a rotor blade of a preferred third embodiment. The disposition of the elements is the same as described in Fig.1. In the surface of the leading edge (19) of rotor blade (1) is placed a conducting non-structural element (14). The first half equipotential bond (6a₁) is connected between the structural element (5) and the spark-gap (10a₁), which is connected to the down-conductor (11) with the second equipotential bond (7a₁). The same arrangement is between the opposite part of the blade, having the first half equipotential bond (6aₙ) connected between the structural element (5) and the down-conductor (11) via spark-gap (lOan). The first half equipotential bond (6a₁) and the second half equipotential bond (7a₁) pass through one side (leading edge (19)) of the web (12) to the other (trailing edge (20)) and are connected to the down-conductor (11). A part of the core layer that fills the web (12) is removed so the spark-gaps (10a₁...10aₙ) are located in its place in a manner that the position of the spark-gaps (10a₁...10aₙ) may be chosen flexibly to be accommodated depending on the design and manufacture process constrains. A second equipotential bond (15) connects the conducting non-structural element (14) and the structural element (5) in one side of the blade (1) and a third equipotential bond (16) connects the conducting non-structural element (14) with the structural element (5) in the opposite side of the blade (1). A second spark-gap (17) is arranged within the second equipotential bond (15) and a third spark-gap (18) is arranged within the third equipotential bond (16) .

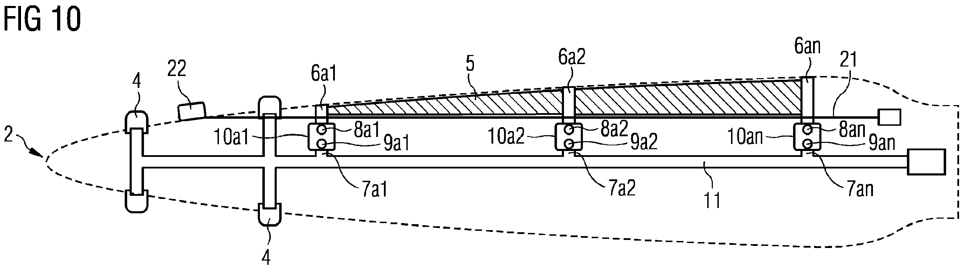

Fig. 10 shows a plain view of a fourth embodiment of the invention. A cable (21) is placed in parallel to structural element (5) and the down-conductor (11). The cable (21) extends from the root (3) towards to the tip (2) to an electrical device (22) located near the tip (2) and connects via the first half equipotential bond (6a₁, 6a₂...6aₙ) to the structural element (5).

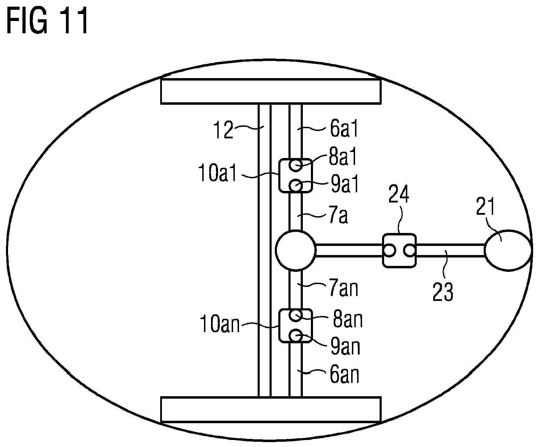

Fig. 11 shows a cross section of another embodiment of the invention. The cable (21) is placed in parallel to the down-conductor (11). The structural element (5) is connected to the down-conductor (11) through the first half equipotential bond (6a₁...6aₙ) and second half equipotential bond (7a₁...7aₙ) and the spark-gap (10a₁...10aₙ) arranged between them. The cable (21) is connected to the down-conductor (11) with a fourth equipotential bond (23), a fourth spark-gap (24) is arranged in the fourth equipotential bond (23).

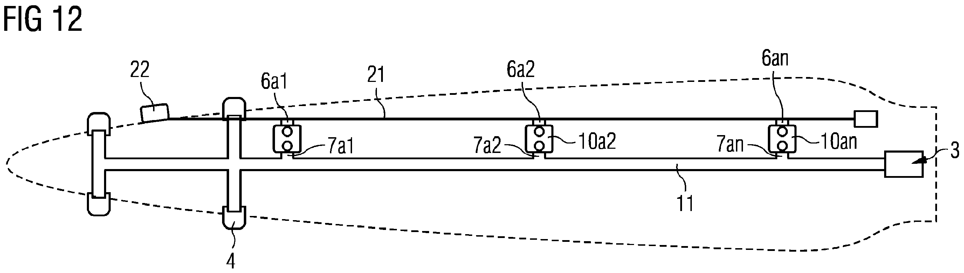

Fig. 12 shows a plain view of a fifth embodiment of the invention. The disposition of the elements is the same as described in Fig. 10. The structural element (5) is not present in this embodiment. The cable (21) is placed parallel to the down-conductor (11) and is connected to the first half equipotential bond (6a₁, 6a₂...6aₙ) towards the tip (2) and connected to an electrical device (22) located near the tip (2). The spark-gap (10a₁, 10a₂... 10aₙ) is arranged between the first half equipotential bond (6a₁, 6a₂...6aₙ) and the second half equipotential bond (7a₁, 7a₂... 7aₙ), which is connected to the down-conductor (11).

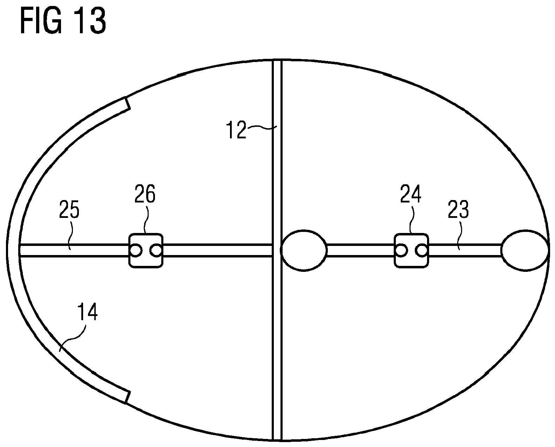

Fig. 13 shows a cross-sectional view of a sixth embodiment. The structural element (5) is not present in this embodiment.

The conducting non-structural element is arranged at the surface of the rotor blade (1) and is connected to the down-conductor with a fifth equipotential bond (25) and a fifth spark-gap (26) is arranged in it. The cable (21) is placed parallel to the down-conductor (11) and connected to it with the fourth equipotential bond (23) and fourth spark gap (24) is arranged in it.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. A wind turbine rotor blade (1) comprising:
- a blade tip (2),
- a blade root (3),
- a web (12),
- a shell (13),
- a plurality of air-termination units (4),
- a down-conductor (11) electrically connected from the blade root (3) to the air-termination units (4); and
- a lightning protection system **characterized in that** it comprises:
- a structural element (5);
- at least one first half equipotential bond (6a₁, 6a₂...6aₙ) is arranged along the structural element (5);
- at least one second half equipotential bond (7a₁, 7a₂... 7aₙ) is arranged along the down-conductor (11) and align with the first half equipotential bond (6a₁, 6a₂...6aₙ) ;
- a first electrode (8a₁, 8a₂... 8aₙ) is arranged at the end of each first half equipotential bond (6a₁, 6a₂...6aₙ) and
- a second electrode (9a₁, 9a₂... 9aₙ) is arranged at the end of each second half equipotential bond (7a₁, 7a₂...7aₙ) ;
wherein the first electrode (8a₁, 8a₂... 8aₙ) and the second electrode (9a₁, 9a₂... 9aₙ) conforms a spark-gap (10a₁, 10a₂... 10aₙ) .

2. A wind turbine rotor blade (1) according to claim 1, **characterized in that** the first electrode (8a₁, 8a₂... 8aₙ) and the second electrode (9a₁, 9a₂... 9aₙ) of the spark-gap (10a₁, 10a₂... 10aₙ) is made of a conductive material comprising carbon, metal or any other conducting material.

3. A wind turbine rotor blade (1) according to claim 1, **characterized in that** the end of the first half equipotential bond (6a₁, 6a₂...6aₙ) is casted, molded, or melted to form the first electrode (8a₁, 8a₂... 8aₙ) of the spark-gap (10a₁, 10a₂... 10aₙ) and at least a part of the down-conductor (11) is melted to form the second electrodes (9a₁, 9a₂... 9aₙ) .

4. A wind turbine rotor blade (1) according to claim 3, **characterized in that** the shape of the first electrode (8a₁, 8a₂... 8aₙ) and the second electrode (9a₁, 9a₂... 9aₙ) is any of sphere, rod, blunt or bundled mesh.

5. A wind turbine rotor blade (1) according to preceding claims, **characterized in that** the structural element (5), the first half equipotential bond (6a₁, 6a₂...6aₙ) and the second half equipotential bond (7a₁, 7a₂... 7aₙ) are made of carbon, metal or any combination thereof.

6. A wind turbine rotor blade (1) according to claim 5, **characterized in that** the structural element (5) is protected with a metallic sheath, wherein the metallic sheath is any of mesh, net, foil, cables or bundles and the material is any of copper, bronze, aluminum, metal, alloy or any combination thereof.

7. A wind turbine rotor blade (1) according to claim 6, **characterized in that** a part of the metallic sheath is fused, melted, crimped, soldered or welded to form the first electrode (8a₁, 8a₂... 8aₙ) of the spark-gap (10a₁, 10a₂... 10aₙ) .

8. A wind turbine rotor blade (1) according to one of the preceding claims, **characterized in that** the blade shell (13) or the web (12) is filled with a core layer and the first half equipotential bond (6a₁, 6a₂...6aₙ) and the second half equipotential bond (7a₁, 7a₂... 7aₙ) pass over, through or across the shell (13) of the rotor blade (1) and wherein a part of the core layer of the shell (13) or the web (12) is removed to place the spark-gap (10a₁, 10a₂... 10aₙ) and the position of the spark-gap (10a₁, 10a₂... 10aₙ) is flexible.

9. A wind turbine rotor blade (1) according to claim 8, **characterized in that** the rotor blade (1) further comprises a conducting non-structural element (14) and wherein a third equipotential bond (15) and a fourth equipotential bond (16) are arranged between the conducting non-structural element (14) and the structural element (5) and/or the down-conductor (11) .

10. A wind turbine rotor blade (1) according to claim 9, **characterized in that** a third spark-gap (17) is arranged within the third equipotential bond (15) and a fourth spark-gap (18) is arranged within the fourth equipotential bond (16) .

11. A wind turbine rotor blade (1) according to claim 5 or 7, **characterized in that** the lightning protection system further comprises a cable (21) parallel to the structural element (5) and the down-conductor (11), the cable (21) goes from near the root (3) towards to the surface near the tip (2) and wherein the cable (21) is connected to an electrical device (22); and said electrical device (22) is any of a sensor, an actuator, a heating element or any device with conducting components.

12. A wind turbine rotor blade (1) according to claim 11, **characterized in that** the cable (21) is connected to the structural element (5) or to the down-conductor (11) with the first half equipotential bond (6a₁, 6a₂...6aₙ) or to the down-conductor (11) with the second half equipotential bond (7a₁, 7a₂...7aₙ), being the spark-gap (10a₁, 10a₂... 10aₙ) arranged between the first half equipotential bond (6a₁, 6a₂...6aₙ) and the second half equipotential bond (7a₁, 7a₂...7aₙ) .

13. A wind turbine rotor blade (1) according to claim 12, **characterized in that** the cable (21) is connected to the down-conductor (11) with a fourth equipotential bond (23) with a fourth spark gap (24) arranged between it.

14. A Wind turbine rotor blade (1) according to claim 12 or 13, **characterized in that** said lightning protection system does not comprise a structural element (5).

15. A wind turbine rotor blade (1) according to claim 14, **characterized in that** the conducting non-structural element (14) is connected to the down-conductor (11) through a fifth equipotential bond (25) with a fifth spark-gap (26) arranged between it.
